# EUROPEAN PATENT SPECIFICATION

(11) **EP 0 585 636 B1**
(45) Date of publication and mention of the grant of the patent: **28.05.1997**
(21) Application number: 93112416.8
(22) Date of filing: 03.08.1993
(51) Int. Cl.: C08G 18/16

(54) **Method for producing modified polyisocyanurate foams**
Verfahren zur Herstellung modifizierter Polyisocyanuratschäume
Méthode pour la préparation de mousses de polyisocyanurate modifié

(30) Priority: 06.08.1992 JP 229436/92
(43) Date of publication of application: 09.03.1994
(73) Proprietor: NISSHINBO INDUSTRIES, INC., Chuo-ku ,Tokyo (JP)
(72) Inventor: Morimoto, Kiyotake, Adachi-ku, Tokyo (JP); Nakamura, Satoshi, Adachi-ku, Tokyo (JP)
(74) Representative: Weisert, Annekäte, Dipl.-Ing. Dr.-Ing.

(56) References cited:
- EP-A- 0 002 281
- EP-A- 0 182 203
- EP-A- 0 381 324
- DE-A- 1 802 082
- FR-A- 2 579 600
- GB-A- 2 112 006
- US-A- 3 980 594

## Description

This invention relates to a method for producing a modified polyisocyanurate foam and, more particularly, to a method for producing a modified polyisocyanurate foam suitable for continuous production of laminate boards, insulation boards and the like which method does not involve the use of evaporating type blowing agent such as CFC, HCFC, HFC and methylene chloride.

It is known to produce a modified polyisocyanurate foam by reacting an organic polyisocyanate and a polyol in the presence of a blowing agent and using an trimerizing catalyst and a carbodiimidizing catalyst in combination (cf., for example, U.S. Patent No. 3,657,161. It has also been proposed to produce a modified polyisocyanurate foam by reacting an organic polyisocyanate and a polyol in the presence of a blowing agent and using methanol, furfuryl alcohol or phosphorene oxide (carbodiimidizing catalyst) and an alkali metal salt (trimerizing catalyst) in combination (U.S. Patent No. 4,166,164, and European Patent No. 381,324). U.S. Patent No. 3,887,501, U.S. Patent No. 3,928,256, U.S. Patent No. 3,998,776, U.S. Patent No. 3,994,837, U.S. Patent No. 3,981,829, U.S. Patent No. 3,994,839 and so on have reported a method for producing a modified polyisocyanurate foam using a tertiary amine and an alcohol such as an amino alcohol as cocatalysts, a method in which a Mannich polyol, a phosphorus containing polyol or the like is used catalytically, a method in which s-triazine and phenol are used.

For producing these (modified) polyisocyanurate foams, it is a general measure to use flon as a blowing agent. However, the use of CFC has a problem of breaking the ozone layer, and in near future the use of CFC and HCFC will be prohibited completely. While there is a possibility to use carbon dioxide gas generated by the reaction between water and isocyanate as a substitute for CFC, this is disadvantageous since increase in the amount of water with view to making low density foam leads to increase in the amount of urea bonds generated (-NCO+H₂O -> -NH₂+CO₂ ↑, -NH₂+OCN- -> -NHCONH-), and therefore there arises a problem of giving only those foams that have low strength, deteriorated dimensional stability, and poor adherability with surface materials. Also, in the above-described conventional method using an trimerizing catalyst and a carbodiimidizing catalyst in combination, it is difficult to control the reaction when water is used as a blowing agent, and in particular, it is impossible to produce low density rigid foam which have a density of not exceeding 30 kg/m³ required for laminate boards or insulation boards at economically acceptable speeds.

Extensive research has been made on development of an industrially applicable method for producing a highly expanded modified polyisocyanurate foams having a density of not exceeding 30 kg/m³ from an organic polyisocyanate and a polyol without using a volatile blowing agent represented by CFC, HCFC, HFC and methylene chloride. As a result, it has been found that the use of a combination of a catalyst selected from certain specified kinds of trimerizing catalysts with a catalyst selected from certain specified kinds of carbodiimidizing catalysts together with water enables trimerization reaction of a polyisocyanate and carbodiimidization reaction, a reaction between water and the polyisocyanate to proceed rapidly in a well balanced manner, so that modified polyisocyanurate foams having low densities as low as not exceeding 30 kg/m³ can be obtained in a short time without using volatile type blowing agents such as CFC. This invention has been complete based on this discovery.

Therefore, according to this invention, there is provided a method for producing a modified polyisocyanurate foam, comprising the step of:
reacting an organic polyisocyanate, a polyol and water in the presence of (a) a trimerizing catalyst selected from hydroxyalkyl quaternary ammonium compounds represented by formula (I) 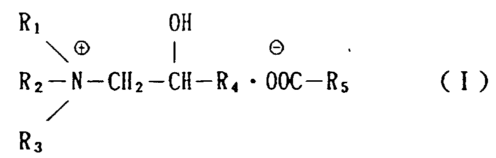 wherein R₁, R₂ and R₃ each represent independently alkyl, aralkyl, cycloalkyl, allyl or hydroxyalkyl group; R₄ and R₅ each represent independently a hydrogen atom, alkyl, phenyl, alkenyl, hydroxyalkyl or ketoalkyl group, and (b) a carbodiimidizing catalyst selected from phosphorene oxides represented by formula (II) or (III) 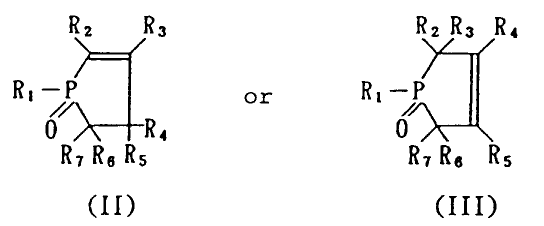 wherein R₁ represents substituted or unsubstituted alkyl, phenyl, naphthyl or benzyl group; R₂, R₃, R₄, R₅, R₆ and R₇ each represent independently H, Cl or a C₁-C₄ alkyl group.

Hereinafter, this invention will be described in more detail.

The organic polyisocyanates used in the method of this invention as starting materials may be any of aliphatic, alicyclic, and aromatic types, and mixtures of these. Those conventionally used in the production of polyurethanes and polyisocyanurates can be used similarly. To be specific, suitable examples thereof include aromatic diisocyanates such as 2,4-tolylene diisocyanate, 2,6-tolylene diisocyanate, crude tolylene diisocyanate, diphenylmethane diisocyanate, and crude diphenylmethane diisocyanate; aromatic triisocyanates such as 4,4',4''-triphenylmethane triisocyanate, and 2,4,6-tolylene triisocyanate; aromatic tetraisocyanates such as 4,4'-dimethyldiphenylmethane-2,2',5,5'-tetraisocyanate; aliphatic isocyanates such as hexamethylene-1,6-diisocyanate; alicyclic isocyanates such as hydrogenated diphenylmethane diisocyanate; and other diisocyanates such as m-phenylene diisocyanate, naphtylene-1,5-diisocyanate, 1,-methoxyphenyl-2,4-diisocyanate, 1,-methoxyphenyl-2,4-diisocyanate, 4,4'-biphenyl diisocyanate, 3,3'-dimethoxy-4,4'-biphenyl diisocyanate, and 3,3'-dimethyldiphenylmethane-4,4'-diisocyanate. Among them, preferred are 2,4-tolylene diisocyanate, 2,6-tolylene diisocyanate, crude tolylene diisocyanate, diphenylmethane diisocyanate, hexamethylene-1,6-diisocyanate, hydrogenated diphenylmethane diisocyanate, etc. The above-described organic polyisocyanates may be used singly or two or more of them may be combined.

The polyols include aliphatic, saccharide, aromatic compounds having two or more hydroxyl groups in the molecule, and mixtures thereof, such as polyether polyols, polyester polyols, and castor oil. Those conventionally used in the production of polyurethanes can also be used similarly. Those polyols may be of either lower molecular weight or high molecular weight. Specific examples thereof include, as polyether polyols, those compounds having structures of active hydrogen-containing compounds such as polyhydric alcohols, polyhydric phenols, amines, or polycarboxylic acids to which alkylene oxides are added. As the polyhydric alcohols, there can be cited, for example, dihydric alcohols such as ethylene glycol, propylene glycol, 1,4-butanediol, 1,6-hexanediol, diethylene glycol, and neopentyl glycol; trihydric or higher polyhydric alcohols such as pentaerythritol, and sucrose. As the polyhydric phenols, there can be cited, for example, polyhydric phenols such as pyrogallol, and hydroquinone; bisphenols such as bisphenol A; condensates of phenol and formaldehyde; and so on. As the amines, there can be cited, for example, ammonia, alkanolamines such as mono-, di- and triethanolamines, isopropanolamine, and aminoethylethanolamine; C₁-C₂₂ alkylamines, C₂-C₆ alkylenediamines, polyalkylenepolyamines, aromatic amines such as aniline, phenylenediamine, diaminotoluene, xylenediamine, methylenedianiline, and diphenyletherdiamine, alicyclic amines such as isophoronediamine, and cyclohexylenediamine, heterocyclic amines, and so on. As the polycarboxylic acids, there can be cited, for example, aliphatic polycarboxylic acids such as succinic acid, adipic acid, sebacic acid, maleic acid, and dimeric acid, aromatic polycarboxylic acids such as phthalic acid, terephthalic acid, trimellitic acid, and pyromellitic acid, etc. These active hydrogen-containing compounds may also be used as a mixture of two or more of them. As the alkylene oxides to be added to the active hydrogen-containing compounds, there can be cited, for example, propylene oxide, ethylene oxide, butylene oxide, tetrahydrofuran, etc. These alkylene oxides may be used singly or two or more of them may be used in combination. In the latter case, they may be blocked adducts or randomly added products. As the polyester polyols, there can be cited, for example, condensed polyester polyols obtained by the reaction between polyhydric alcohols (the aforementioned alcohols, trimethylolpropane, glycerol, etc.) and carboxylic acids (the aforementioned polycarboxylic acids, etc.), polyester polyols obtained by ring opening polymerization lactone, scrap PET to which ethylene oxide adduct of nonylphenol is added, and the like. Among them, aliphatic, aromatic, aliphatic or aromatic amine, pentaerythritol, or sucrose based polyether polyols; aromatic or aliphatic carboxylic acid polyester polyols; lactone polyester polyols; etc. are particularly preferred. The aforementioned polyols may be used singly or two or more of them may be used in combination.

The aforementioned polyols may have a hydroxyl number within the range of generally 20 to 600 mgKOH/g, preferably 25 to 500 mgKOH/g, more preferably 50 to 400 mgKOH/g.

According to the method of this invention, polyisocyanurate foams can be generated by the reaction of the aforementioned organic polyisocyanate with the aforementioned polyol together with water as a blowing agent. To perform the reaction, compounding proportions of the organic polyisocyanate, the polyol and water are not limited strictly, and may vary widely depending on desired physical properties and uses of final products of modified polyisocyanurate foams. Generally, it is preferred to react the aforementioned components after blending them such that isocyanate index expressed as NCO/OH equivalent ratio can become within the range of not below 1.8, preferably from 1.8 to 5, more preferably 2 to 4.

The amount of water to be used as a blowing agent can be controlled depending on the density and the like desired for final products of the modified polyisocyanurate foam. In particular, the method of this invention has a feature that low density rigid foam magnifications can be produced by using only water and without using volatile blowing agents. According to the method of this invention, addition of water in amounts within the rang of, for example, 0.3 to 1.8% by weight, preferably 0.8 to 1.5% by weight, based on the total weight of organic polyisocyanate, polyol and water enables production of low density foam having a free rise density of generally 30 kg/m³, preferably 20 to 28 kg/m³, with ease without using volatile blowing agents.

The method of this invention is characterized in that the reaction for producing a modified polyisocyanurate foam from the aforementioned organic polyisocyanate, polyol and water is practiced in the presence of (a) a trimerizing catalyst selected from hydroxyalkyl quaternary ammonium compounds represented by formula (I) 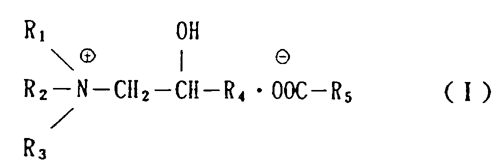 wherein R₁, R₂ and R₃ each represent independently alkyl, aralkyl, cycloalkyl, allyl or hydroxyalkyl group; R₄ and R₅ each represent independently a hydrogen atom, alkyl, phenyl, alkenyl, hydroxyalkyl or ketoalkyl group, and (b) a carbodiimidizing catalyst selected from phosphorene oxides represented by formula (II) or (III) 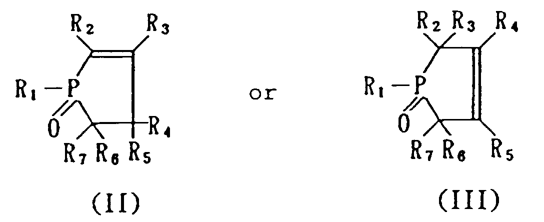 wherein R₁ represents substituted or unsubstituted alkyl, phenyl, naphthyl or benzyl group; R₂, R₃, R₄, R₅, R₆ and R₇ each represent independently H, Cl or a C₁-C₄ alkyl group.

In formula (I) above, the "alkyl" may either straight chain or branched chain, and include, for example, methyl, ethyl, n-propyl, isopropyl, n-butyl, tert-butyl, n-pentyl, isoamyl, n-hexyl, n-heptyl, 1-ethylpentyl, n-ocytyl, 2-ethylhexyl, etc. The alkyl group represented by R₁ to R₃ is preferably lower ones having no greater than 6 carbon atoms, more preferably no greater than 4 carbon atoms. On the other hand, the alkyl group represented by R₄ and R₅ includes not only lower ones but also higher ones having up to 18 carbon atoms.

The hydroxyalkyl quaternary ammonium compounds represented by formula (I) above used as a trimerizing catalyst in the method of this invention are known per se as catalysts in the production of polyurethanes, polyisocyanurates, polyurethane-polyisocyanurates (cf., for example, U.S. Patent No. 4,040,992), and specific examples thereof include the following.

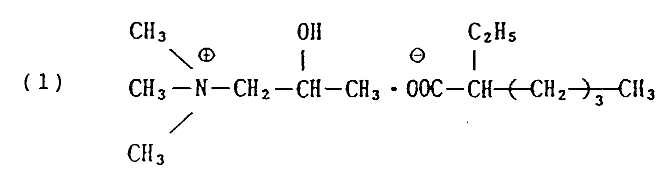

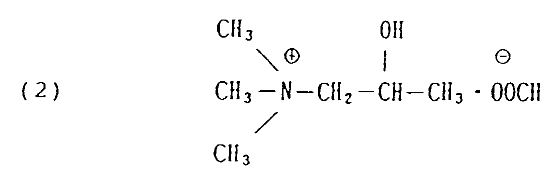

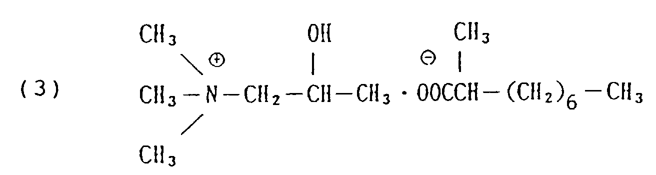

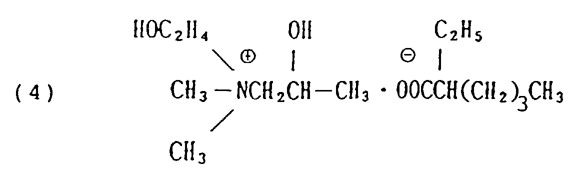

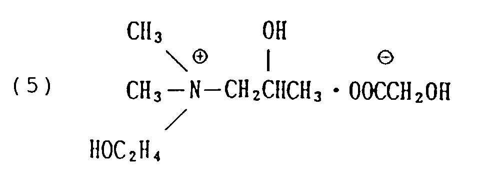

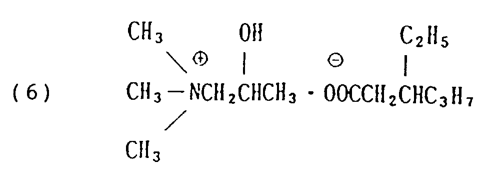

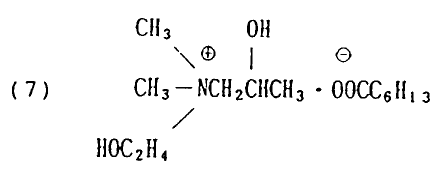

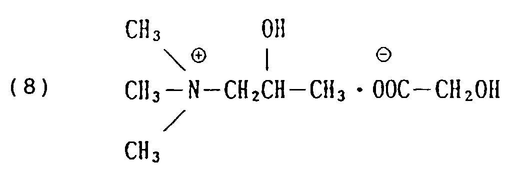

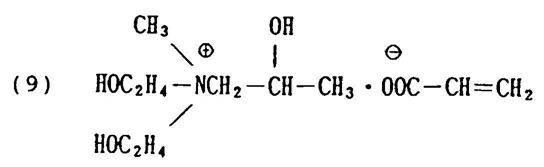

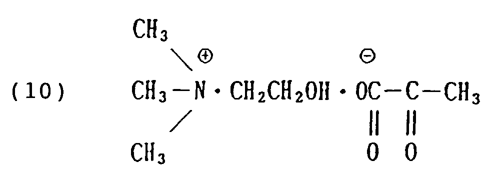

Among these hydroxyalkyl quaternary ammonium compounds, the compounds (1) and (2) above are used suitably.

On the other hand, as for the compounds represented by formula (II) or (III) used in combination with the aforementioned hydroxyalkyl quaternary ammonium compounds, the alkyl group represented by R₁ may be either straight chain or branched chain, or partially substituted with halogen or other functional groups. Examples of such an alkyl group include methyl, ethyl, propyl, isopropyl, n-butyl, tert-butyl, 2-phenylethyl, 2-chloroethyl, 2-methoxyethyl, etc. groups. The substituted or unsubstituted phenyl, naphthyl and benzyl group include benzyl, phenyl, o-, p- or m-tolyl, xylyl, naphthyl, 4-diphenyl, o-, p- or m-chlorophenyl, etc. R₁ may preferably be a C₁-C₄ alkyl group, a phenyl group, or a benzyl group. The groups represented by R₂-R₇ of formula (II) or (III) include hydrogen, chlorine, methyl, ethyl, propyl, isopropyl, butyl, etc., preferably hydrogen and methyl.

Specific examples of phosphorene oxide represented by formula (II) or (III) include the following: 1-methylphosphorene oxide, 3-methyl-1-phenylphosphorene oxide, 3-methyl-1-benzyl-phosphorene oxide, 3-methyl-1-ethylphosphorene oxide, 3-methyl-1-ethylphenylphosporene oxide, 1-phenyl-3-(4-methyl-3-pentenyl)phosphorene oxide, 1-phenyl-3-chlorophosphorene oxide, etc. Among these phosphorene oxides, 3-methyl-1-phenylphosphorene oxide, especially 3-methy-1-phenyl-2-phosphorene oxide and 3-methyl-1-phenyl-3-phosphorene oxide are used suitably. These phosphorene oxides are known per se as a catalyst for accelerating the reaction for producing carbodiimide linkage from organic isocyanates (cf., for example, U.S. Patent No. 3,657,161).

This invention is characterized by the use of specified combination of the hydroxyalkyl quaternary ammonium compounds represented by formula (I) above (trimerizing catalyst) with phosphorene oxides represented by formula (II) or (III) (carbodiimidizing catalyst) as a catalyst for producing modified polyisocyanurate foams from organic polyisocyanates, polyols and water. Hence, it is successful to produce low density modified polyisocyanurate foams by an industrially applicable method without using volatile blowing agents such as CFC and HCFC which introduces problems.

Amounts of the hydroxyalkyl quaternary ammonium compounds represented by formula (I) above (trimerizing catalyst) with phosphorene oxides represented by formula (II) or (III) (carbodiimidizing catalyst) to be used are not limited strictly and may vary depending on reaction conditions used as the like. It is suitable that based on the weight of the organic polyisocyanate, the former, i.e., the trimerizing catalyst, is used in amounts within the range of generally 0.1 to 10% by weight, preferably 0.5 to 5% by weight, while the latter, i.e., the carbodiimidizing catalyst is used in amounts within the range of generally 0.05 to 5% by weight, preferably 0.1 to 2% by weight.

Relative proportion of the trimerizing catalyst to the carbodiimidizing catalyst may vary within a wide range depending on physical properties desired for final products. The weight ratio of trimerizing catalyst/carbodiimidizing catalyst is within the range of usually 0.5/1 to 20/1, preferably 1/1 to 10/1.

In the method of this invention, there can be used various additives in combination in amounts usually used. Such additives include, for example, urethanating catalysts (for example, triethylenediamine, dimethylethanolamine, triethylamine, trimethylaminoethylethanolamine, dimethylaminoethylether, pentamethyldiethylenetriamine, N-methyl-morpholine, dibutyltin dilaurate, tin octanoate, lead octanoate, etc.), surfactants (for example, dimethylsiloxane/polyether block copolymer, etc.), crosslinking agent (for example, ethylene glycol, propylene glycol, 1,4-butanediol, 1,6-hexanediol, diethylene glycol, triethanolamine, diethanolamine, ethylenediamine, toluenediamine, etc.), flame retardants (for example, triphenyl phosphate, triethyl phosphate, trimethyl phosphate, cresyldiphenyl phosphate, tris(cresyl) phosphate, tris-(chloroethyl) phosphate, tris(dichloropropyl) phosphate, tris(β-chloropropyl) phosphate, tris(β-chloroethyl) phosphate, tris(2,3-dibromopropyl) phosphate, tris(bromocresyl) phosphate, melamine, antimony trioxide, etc.), colorants, etc.

As the method for producing modified polyisocyanurate foams from the components described above, there can be cited, for example, a method in which first there are provided an isocyanate component composed of the aforementioned organic polyisocyanate or an isocyanate-termianted prepolymer component obtained by reacting an organic polyisocyanate with a polyol, and a polyol component from the above-described polyol, water, trimerizing catalyst and carbodiimidizing catalyst, and optionally one or more of the urethanating catalyst, surfactant, crosslinking agent, flame retardant, colorant and other additives, and then upon use, the both components are put together, rapidly stirred and mixed. The resulting mixture is foamed and cured.

It is sufficient to set the reaction temperature at room temperature. In some cases, the reaction temperature may be elevated up to a temperature of about 90°C.

### EXAMPLES

Hereinafter, this invention will be described more concretely.

### Examples 1-14 and Comparative Examples 1-6

A polyol component prepared by mixing predetermined amounts of polyols, water, catalysts, a surfactant, and a flame retardant shown in Table 1 below were mixed to prepare 25 g (50 g in Example 14) each of polyol components with 75 g (50 g in Example 14) of crude MDI (diphenylmethane diisocyanate), and the mixture was stirred for 5 seconds with a hand drill (2,200 rpm, stirrer: 300 mmφ). The mixture (80 g) was poured in a 150x150x150 mm wood box, and measurement was made of cream time and rise time. Cream time was defined as a time from liquefaction to initiation of foaming, and rise time was defined as a time from the initiation of foaming to completion of the foaming. After 1 minutes foam was touched to judge curing state of its surface. A central portion of the cured foam was cut to a size of about 100x100x100 mm, and free rise density was calculated from its volume and weight.

Results obtained are shown in Table 1.

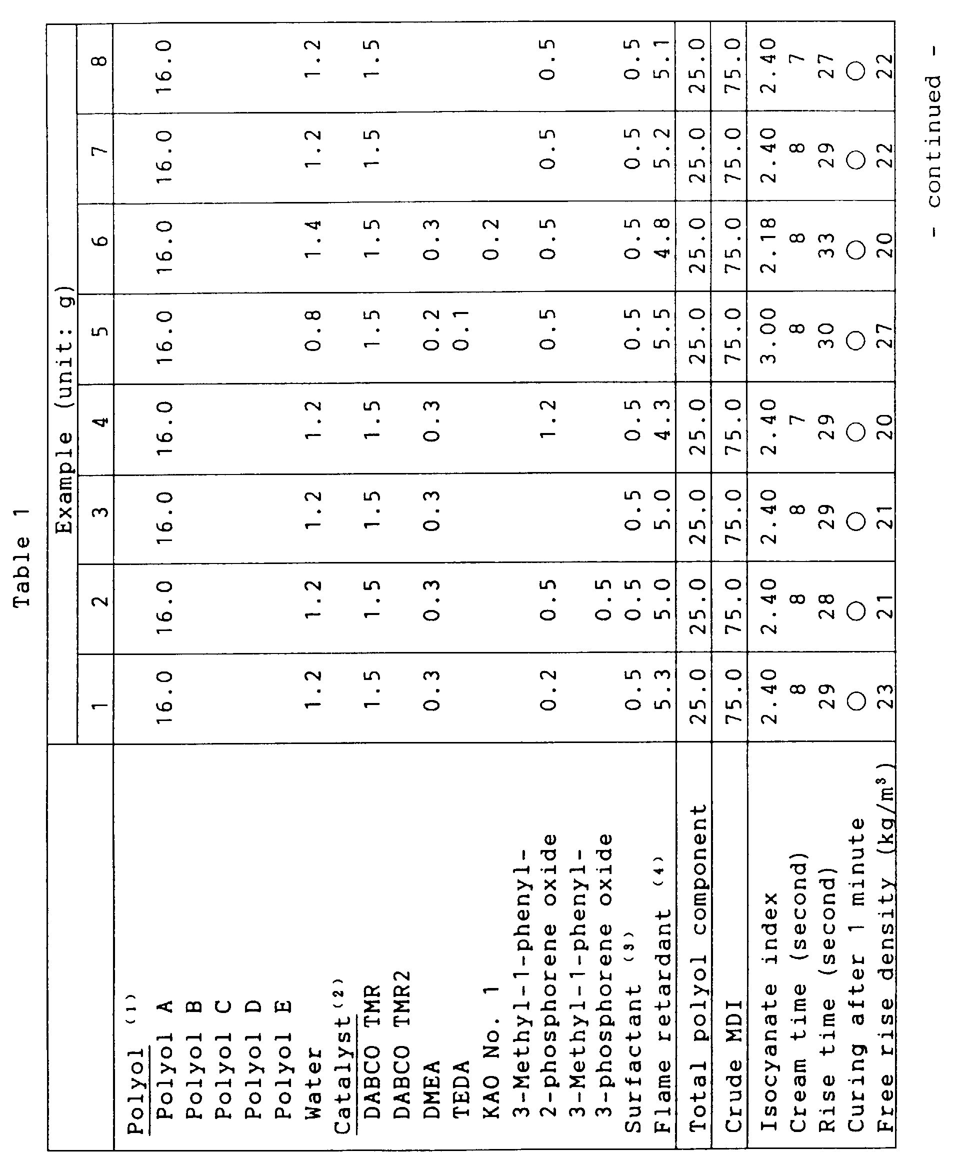

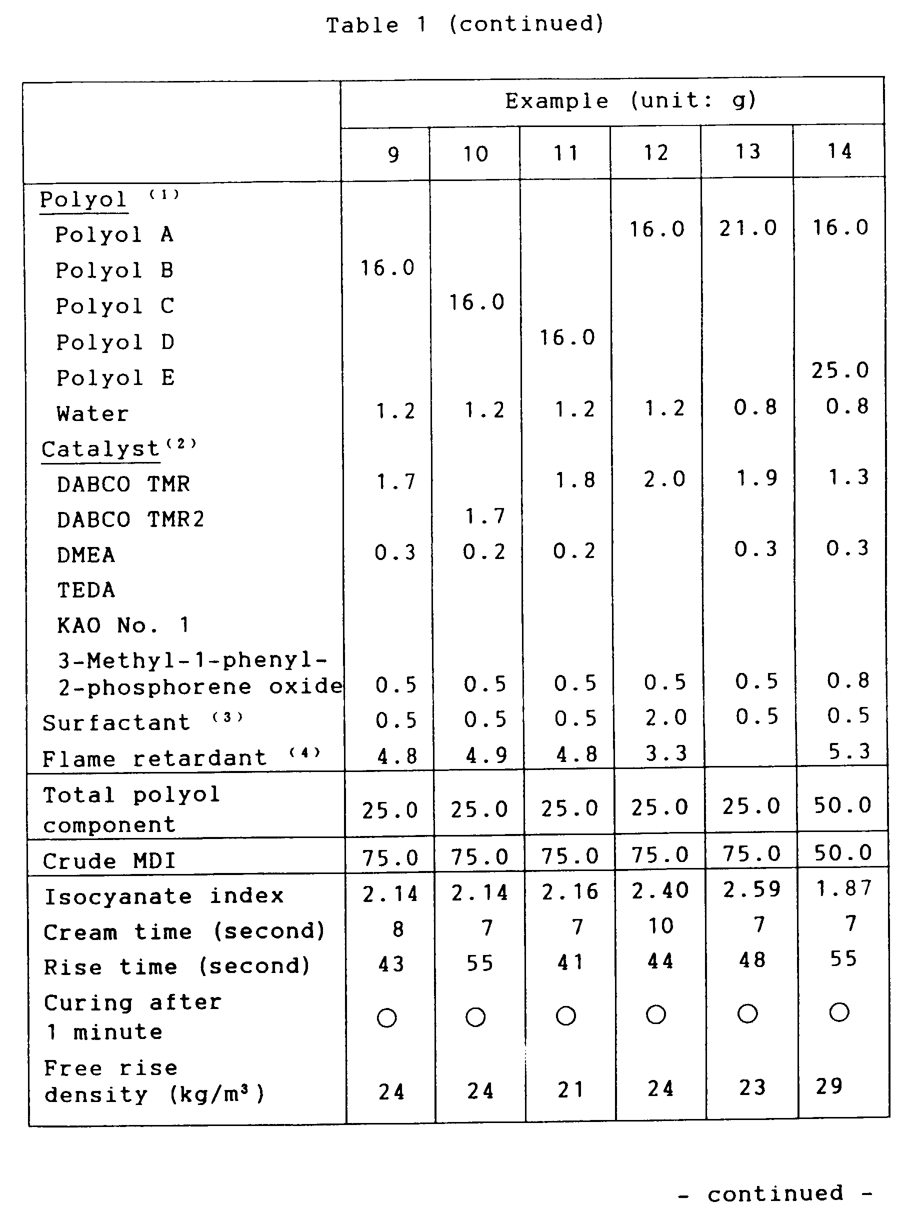

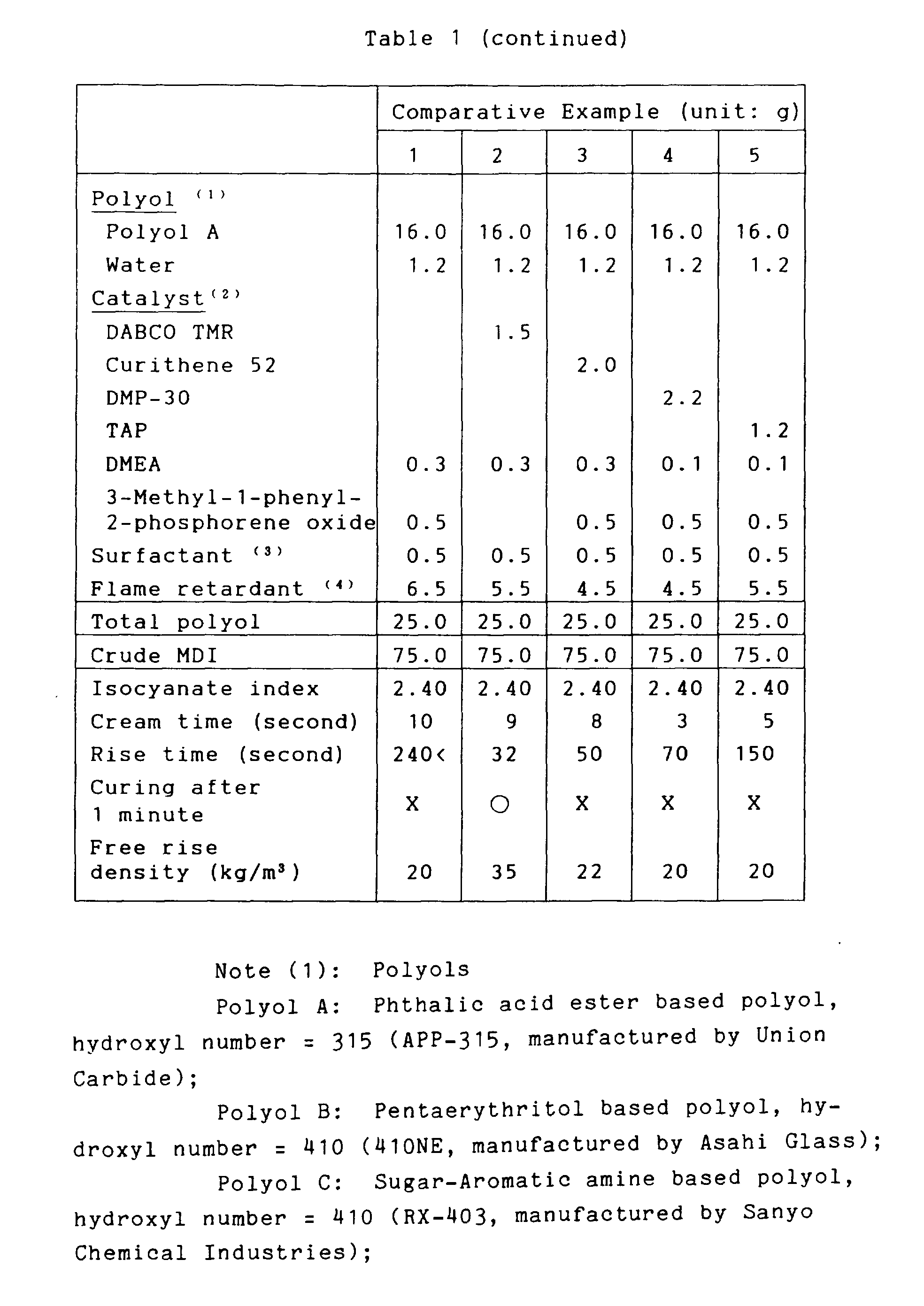

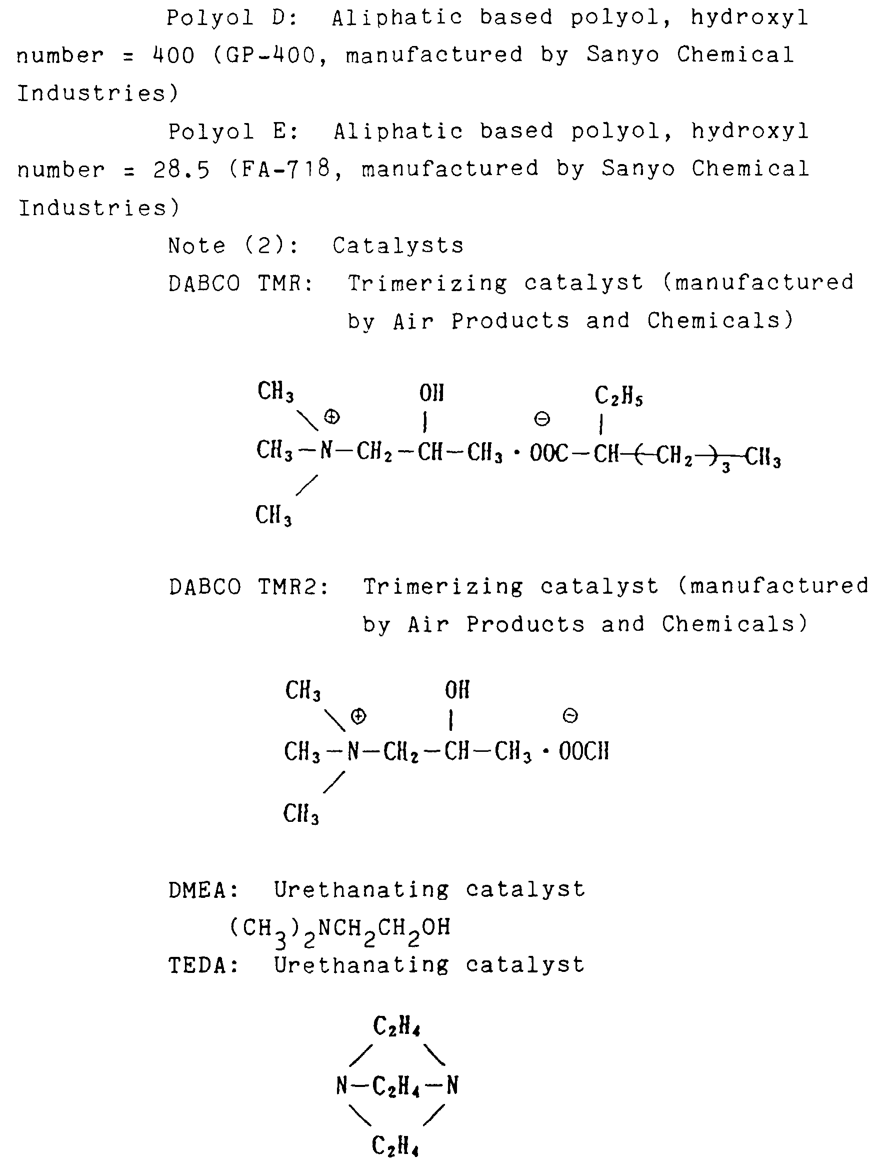

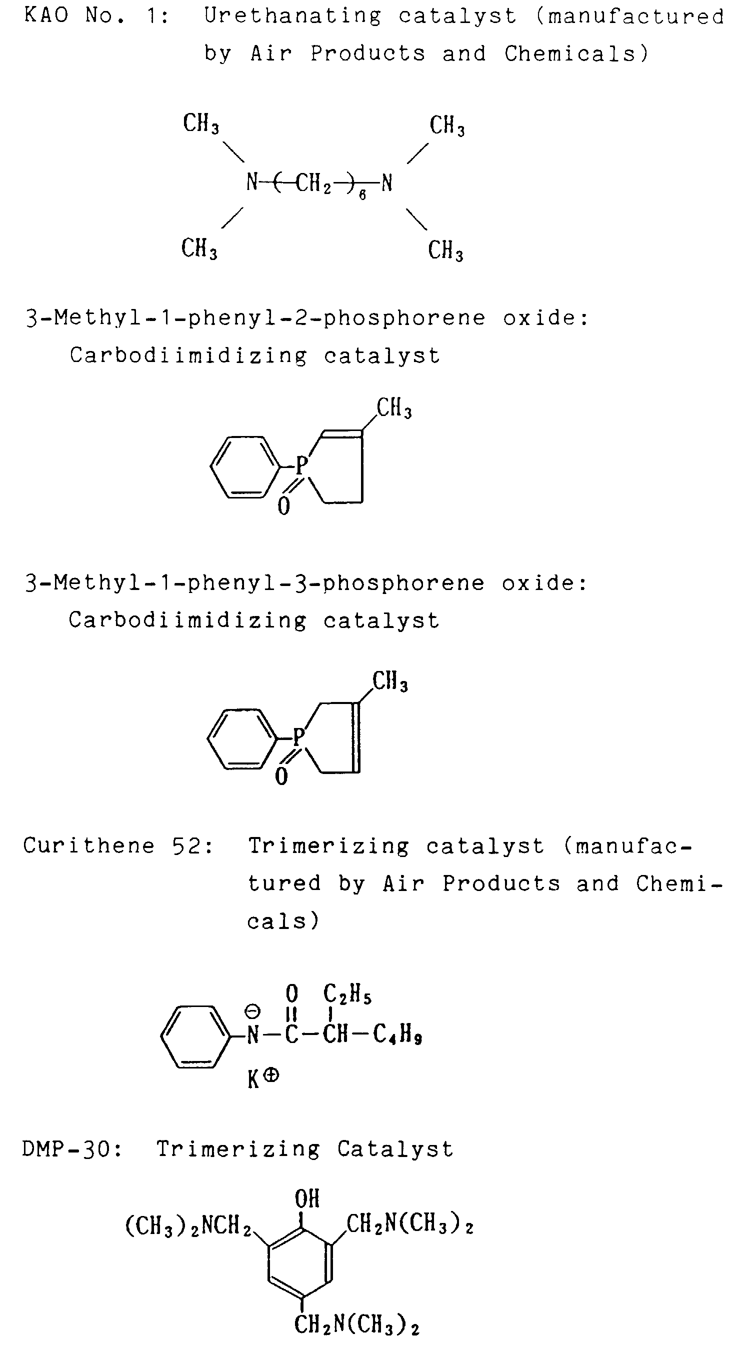

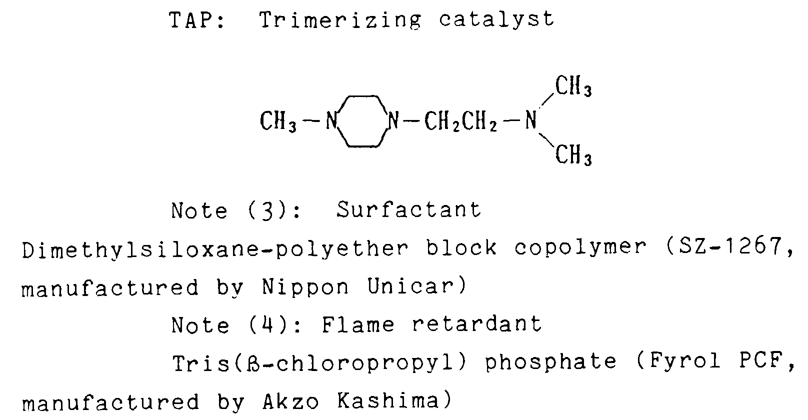

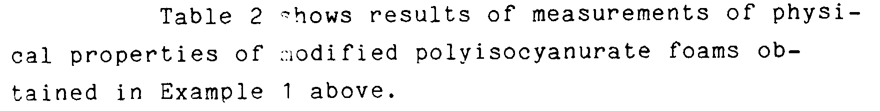

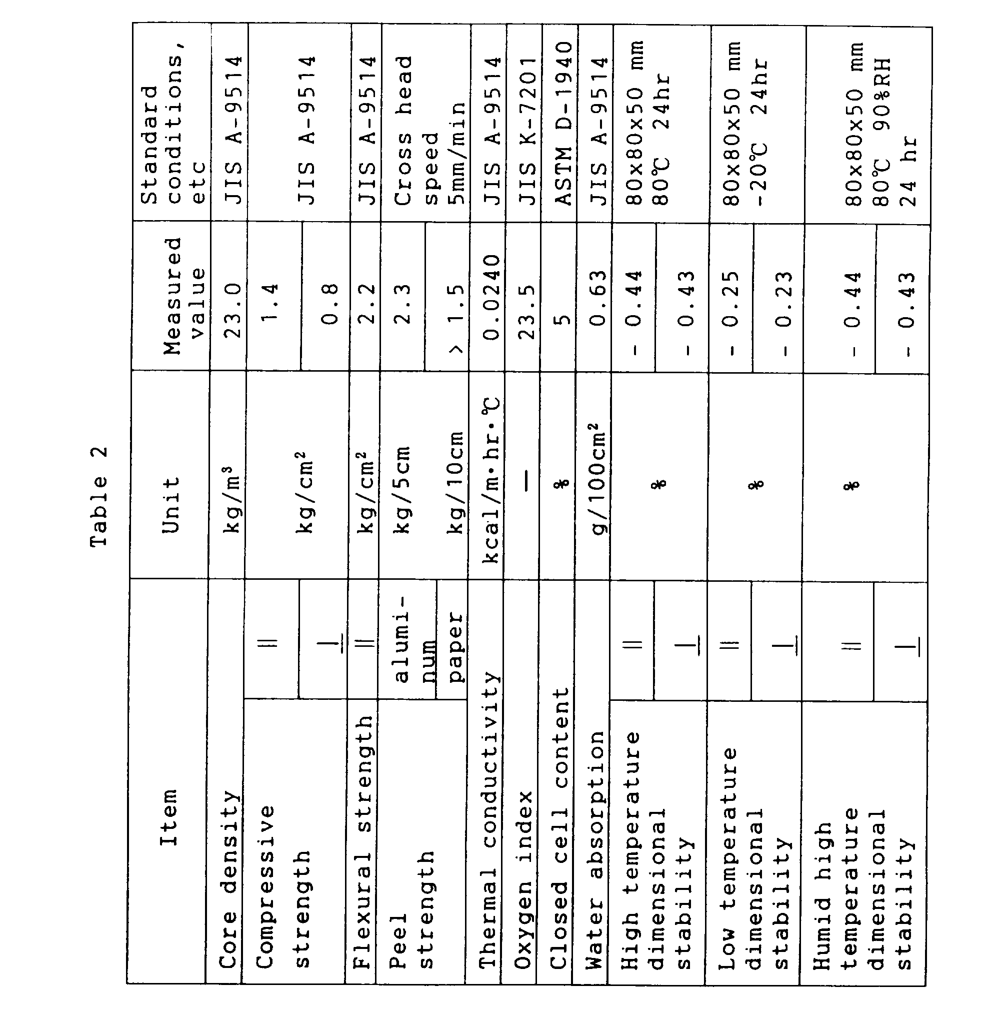

### Example 15

Procedure of Example 1 was applied to an actual insulation board continuous production line.

Foaming apparatus: Low pressure foaming apparatus (forced stirring method), G-05 model (home made), output amount: 2.0 kg/minute.

Double conveyor: conveyor length; 18 m, conveyor speed; 10 m/minute

Cutter: running circular saw cutter, cutting was performed 2 minutes and 20 seconds after the pouring.

Molded article: facing material; front surface: decorated aluminum plate of 0.32 mm thick, back surface: aluminum craft paper.
- Molded article:: width; 350 mm, thickness; 18 20.
- Temperature conditions:: polyol component; 25°C,
isocyanate component; 40°C,
facing material; 20°C,
conveyor; 75°C.

When continuous molding was performed under the above-described conditions, no problem arose with respect to packing, curing and cutting properties, and molded articles encountered no problem with respect to warpage, shrink, adhesion with paper and aluminum, etc.

Major physical properties of continuous line products:

| | |
|---|---|
| Foam density | 32 kg/m³ |
| Peel strength (paper) | 2.4 kg/10 cm |
| Oxygen index | 24 |
| Compressive strength | 1.4 kg/cm² |

## Claims

1. A method for producing a modified polyisocyanurate foam, comprising the step of:
reacting an organic polyisocyanate, polyol and water is practiced in the presence of (a) a trimerizing catalyst selected from hydroxyalkyl quaternary ammonium compounds represented by formula (I) 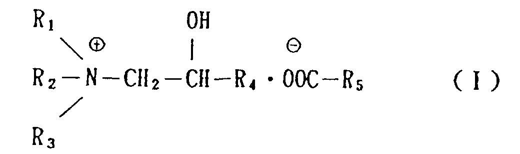 wherein R₁, R₂ and R₃ each represent independently alkyl, aralkyl, cycloalkyl, allyl or hydroxyalkyl group; R₄ and R₅ each represent independently a hydrogen atom, alkyl, phenyl, alkenyl, hydroxyalkyl or ketoalkyl group, and (b) a carbodiimidizing catalyst selected from phosphorene oxides represented by formula (II) or (III) 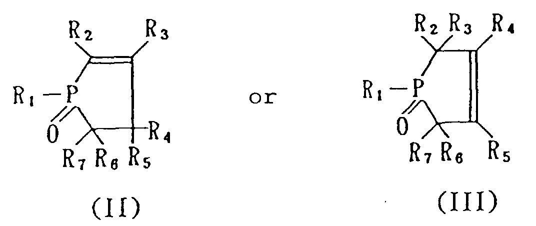 wherein R₁ represents substituted or unsubstituted alkyl, phenyl, naphthyl or benzyl group; R₂, R₃, R₄, R₅, R₆ and R₇ each represent independently H, Cl or a C₁-C₄ alkyl group.

2. The method of claim 1, wherein said hydroxyalkyl quaternary ammonium compound is a compound represented by formula (I) in which R₁, R₂ and R₃ each represent independently a C₁-C₄ alkyl group; and R₄ and R₅ each represent independently a hydrogen atom or a C₁-C₁₈ alkyl group.

3. The method of claim 1, wherein said hydroxyalkyl quaternary ammonium compound is selected from the group consisting of the following compounds: 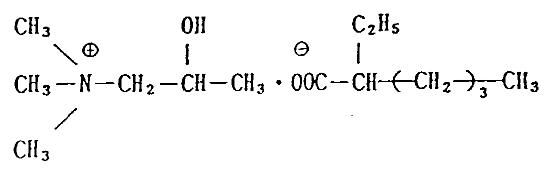 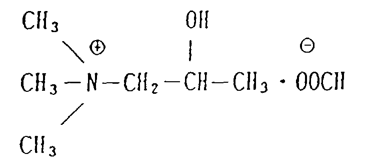 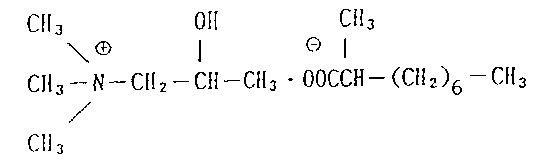 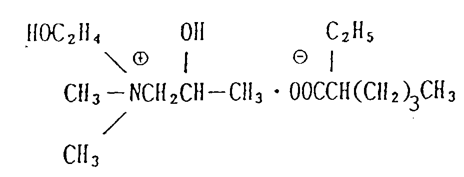 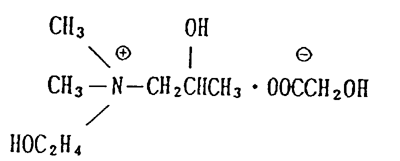 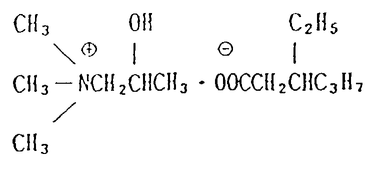 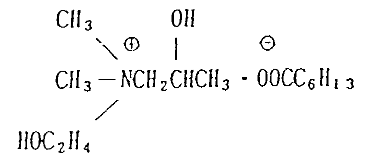 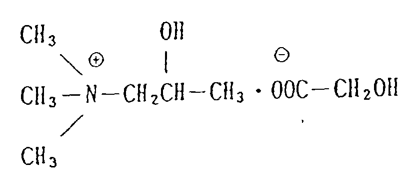 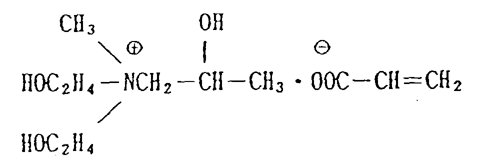 and

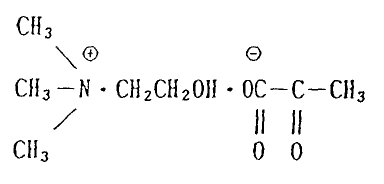

4. The method of claim 1, wherein said hydroxyalkyl quaternary ammonium compound is 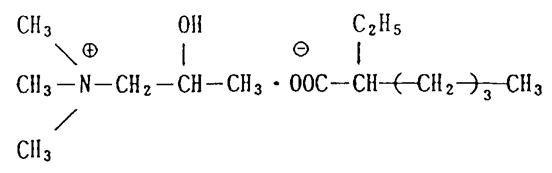 or

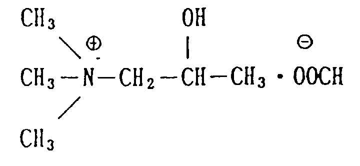

5. The method of claim 1, wherein said phosphorene oxide is a compound represented by formula (II) or (III) in which R₂, R₃, R₄, R₅, R₆ and R₇ each represent independently a hydrogen atom, a chlorine atom, a methyl group, an ethyl group, a propyl group, an isopropyl group or a butyl group.

6. The method of claim 1, wherein said phosphorene oxide is selected from the group consisting of 1-methyl-phosphorene oxide, 3-methyl-1-phenylphosphorene oxide, 3-methyl-1-benzylphosphorene oxide, 3-methyl-1-ethylphosphorene oxide, 3-methyl-1-ethylphenylphosphorene oxide, 1-phenyl-3-(4-methyl-3-pentenyl)phosphorene oxide and 1-phenyl-3-chlorophosphorene oxide.

7. The method of claim 1, wherein said phosphorene oxide is 3-methyl-1-phenylphosphorene oxide.

8. The method of claim 1, wherein said trimerizing catalyst is used in an amount within the range of 0.1 to 10% by weight based on the weight of said organic polyisocyanate.

9. The method of claim 1, wherein said carbodiimidizing catalyst is used in an amount within the range of 0.05 to 5% by weight based on the weight of said organic polyisocyanate.

10. The method of claim 1, wherein weight ratio of said trimerizing catalyst/said carbodiimidizing catalyst is within the range of 0.5/1 to 20/1.

11. The method of claim 1, wherein said organic polyisocyanate is selected from the group consisting of 2,4-tolylene diisocyanate, 2,6-tolylene diisocyanate, crude tolylene diisocyanate, diphenylmethane diisocyanate, crude diphenylmethane diisocyanate, hexamethylene-1,6-diisocyanate, and hydrogenated diphenylmethane diisocyanate.

12. The method of claim 1, wherein said polyol is at least one polyol having a hydroxyl number within the range of 20 to 600 mgKOH/g.

13. The method of claim 1, wherein compounding proportions of said organic polyisocyanate, said polyol and said water are such that isocyanate index defined by NCO/OH equivalent ratio is not below 1.8.

14. The method of claim 1, wherein said water is used in an amount within the range of 0.3 to 1.8% by weight based on the total weight of said organic polyisocyanate, said polyol and said water.

15. The method of claim 1, wherein said modified polyisocyanurate foam has a free rise density of not exceeding 30 kg/m³.

16. A catalyst for use in polymerization of isocyanate, comprising a hydroxyalkyl quaternary ammonium compound represented by formula (I) as defined in claim 1 and a phosphorene oxide represented by formula (II) or (III) as defined in claim 1.

17. A polyol composition comprising a polyol, water and said catalyst described in claim 16.

## Patentansprüche

1. Verfahren zur Herstellung eines modifizierten Polyisocyanuratschaums, umfassend die Stufen:
Umsetzung eines organischen Polyisocyanats, eines Polyols und Wasser in Anwesenheit von (a) einem Trimerisierungskatalysator, ausgewählt aus quaternären Hydroxyalkylammoniumverbindungen, dargestellt durch die Formel (I): 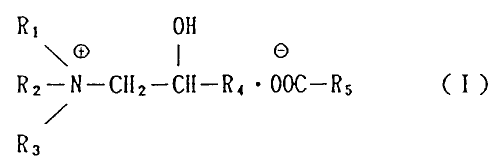 worin R₁, R₂ und R₃ je unabhängig eine Alkyl-, Aralkyl-, Cycloalkyl-, Allyl- oder Hydroxyalkylgruppe bedeuten; R₄ und R₅ je unabhängig ein Wasserstoffatom, eine Alkyl-, Phenyl-, Alkenyl-, Hydroxyalkyl- oder Ketoalkylgruppe bedeuten; und (b) eines Carbodiimidisierungskatalysators, ausgewählt aus Phosphorenoxiden, dargestellt durch die Formel (II) oder (III): 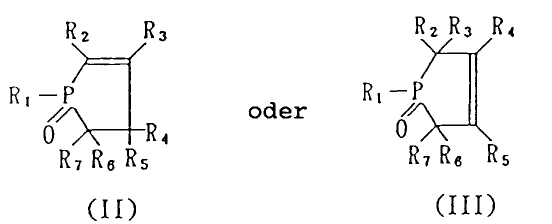 worin R₁ eine substituierte oder unsubstituierte Alkyl-, Phenyl-, Naphthyl- oder Benzylgruppe bedeutet; R₂, R₃ , R₄, R₅, R₆ und R₇ je unabhängig H, Cl oder eine C₁-C₄-Alkylgruppe bedeuten.

2. Verfahren nach Anspruch 1, dadurch **gekennzeichnet,** daß die quaternäre Hydroxyalkylammoniumverbindung eine Verbindung ist, dargestellt durch die Formel (I), worin R₁, R₂ und R₃ je unabhängig eine C₁-C₄-Alkylgruppe bedeuten; und R₄ und R₅ je unabhängig ein Wasserstoffatom oder eine C₁-C₁₈-Alkylqruppe bedeuten.

3. Verfahren nach Anspruch 1, dadurch **gekennzeichnet,** daß die quaternäre Hydroxyalkylammoniumverbindung ausgewählt wird aus der Gruppe bestehend aus den folgenden Verbindungen: 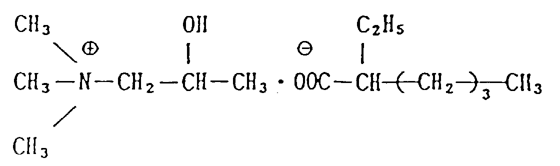 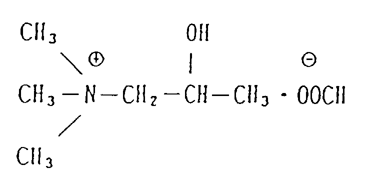 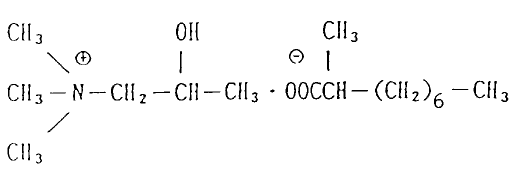 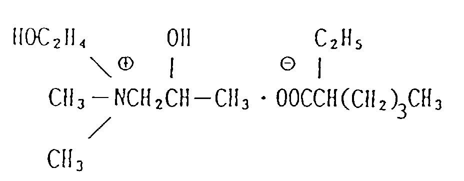 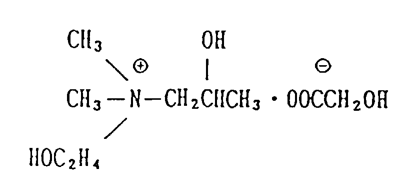 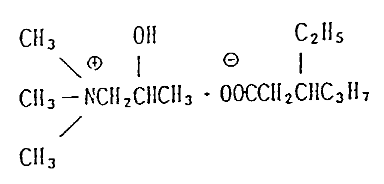 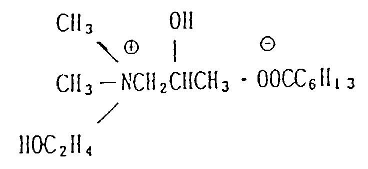 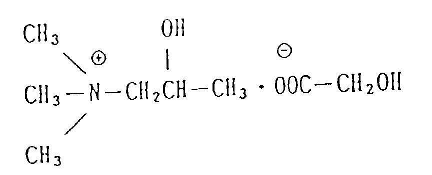 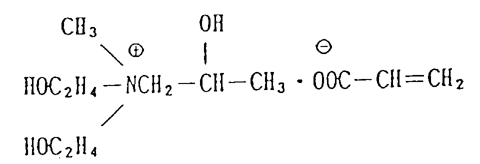 und

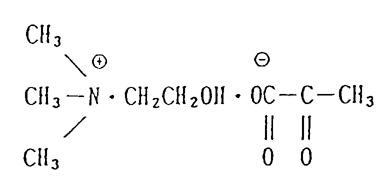

4. Verfahren nach Anspruch 1, dadurch **gekennzeichnet,** daß die quaternäre Hydroxyalkylammoniumverbindung 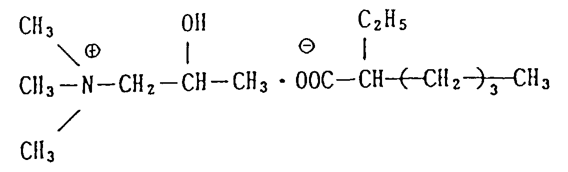 oder 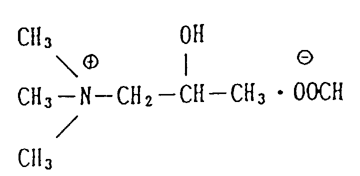 ist.

5. Verfahren nach Anspruch 1, dadurch **gekennzeichnet,** daß das Phosphorenoxid eine Verbindung ist, dargestellt durch die Formel (II) oder (III), worin R₂, R₃, R₄, R₅, R₆ und R₇ je unabhängig ein Wasserstoffatom, ein Chloratom, eine Methylgruppe, eine Ethylgruppe, eine Propylgruppe, eine Isopropylgruppe oder eine Butylgruppe bedeuten.

6. Verfahren nach Anspruch 1, dadurch **gekennzeichnet,** daß das Phosphorenoxid ausgewählt wird aus der Gruppe bestehend aus l-Methylphosphorenoxid, 3-Methyl-1-phenylphosphorenoxid, 3-Methyl-1-benzylphosphorenoxid, 3-Methyl-1-ethylphosphorenoxid, 3-Methyl-1-ethylphenylphosphorenoxid, 1-Phenyl-3-(4-methyl-3-pentenyl)phosphorenoxid und 1-Phenyl-3-chlorphosphorenoxid.

7. Verfahren nach Anspruch 1, dadurch **gekennzeichnet,** daß das Phosphorenoxid 3-Methyl-1-phenylphosphorenoxid ist.

8. Verfahren nach Anspruch 1, dadurch **gekennzeichnet,** daß der Trimerisierungskatalysator in einer Menge im Bereich von 0,1 bis 10 Gew.-%, bezogen auf das Gewicht des organischen Polyisocyanats, verwendet wird.

9. Verfahren nach Anspruch 1, dadurch **gekennzeichnet,** daß der Carbodiimidisierungskatalysator in einer Menge im Bereich von 0,05 bis 5 Gew.-%, bezogen auf das Gewicht des organischen Polyisocyanats, verwendet wird.

10. Verfahren nach Anspruch 1, dadurch **gekennzeichnet,** daß das Gewichtsverhältnis von Trimerisierungskatalysator/Carbodiimidisierungskatalysator innerhalb des Bereiches von 0,5:1 bis 20:1 liegt.

11. Verfahren nach Anspruch 1, dadurch **gekennzeichnet,** daß das organische Polyisocyanat ausgewählt wird aus der Gruppe bestehend aus 2,4-Tolylendiisocyanat, 2,6-Tolylendiisocyanat, rohem Tolylendiisocyanat, Diphenylmethandiisocyanat, rohem Diphenylmethandiisocyanat, Hexamethylen-1,6-diisocyanat und hydriertem Diphenylmethandiisocyanat.

12. Verfahren nach Anspruch 1, dadurch **gekennzeichnet,** daß das Polyol mindestens ein Polyol mit einer Hydroxylzahl im Bereich von 20 bis 600 mgKOH/g ist.

13. Verfahren nach Anspruch 1, dadurch **gekennzeichnet,** daß die Verarbeitungsverhältnisse von organischem Polyisocyanat, Polyol und Wasser so sind, daß der Isocyanatindex, definiert durch das NCO/OH-Äquivalent-verhältnis, nicht unter 1,8 liegt.

14. Verfahren nach Anspruch 1, dadurch **gekennzeichnet,** daß das Wasser in einer Menge im Bereich von 0,3 bis 1,8 Gew.-%, bezogen auf das Gesamtgewicht des organischen Polyisocyanats, des Polyols und des Wassers, verwendet wird.

15. Verfahren nach Anspruch 1, dadurch **gekennzeichnet,** daß der modifizierte Polyisocyanuratschaum eine freie Anstiegsdichte besitzt, die 30 kg/m³ nicht überschreitet.

16. Katalysator für die Verwendung bei der Polymerisation eines Isocyanats, umfassend eine quaternäre Hydroxyalkylammoniumverbindung, dargestellt durch die Formel (I), wie in Anspruch 1 definiert, und ein Phosphorenoxid, dargestellt durch die Formel (II) oder (III), wie in Anspruch 1 definiert.

17. Polyolzusammensetzung, umfassend ein Polyol, Wasser und den in Anspruch 16 definierten Katalysator.

## Revendications

1. Procédé de préparation d'une mousse de polyisocyanurate modifié, comprenant l'étape suivante :
mise en réaction d'un polyisocyanate organique, d'un polyol et d'eau en présence de (a) un catalyseur de trimérisation choisi parmi les composés d'ammonium quaternaire hydroxyalkylé représentés par la formule (I) 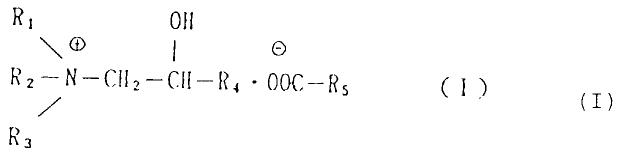 dans laquelle R₁, R₂ et R₃ représentent chacun, indépendamment, un groupe alkyle, aralkyle, cycloalkyle, allyle ou hydroxyalkyle ; R₄ et R₅ représentent chacun, indépendamment, un atome d'hydrogène, un groupe alkyle, phényle, alcényle, hydroxyalkyle ou cétoalkyle ; et (b) un catalyseur de carbodiimidification choisi parmi les oxydes de phosphorène représentés par la formule (II) ou (III) 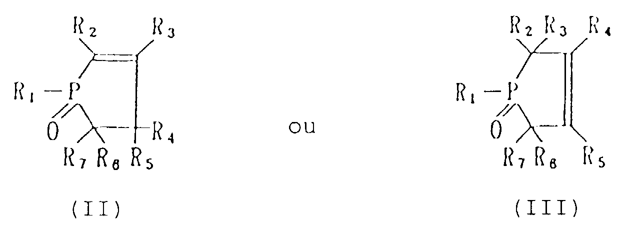 dans laquelle R₁ représente un groupe alkyle, phényle, naphtyle ou benzyle substitué ou non substitué ; R₂, R₃, R₄, R₅, R₆ et R₇ représentent chacun, indépendamment, H, Cl ou un groupe alkyle en C₁-C₄.

2. Procédé selon la revendication 1, dans lequel ledit composé d'ammonium quaternaire hydroxyalkylé est un composé représenté par la formule (I) dans laquelle R₁, R₂ et R₃ représentent chacun, indépendamment, un groupe alkyle en C₁-C₄ ; et R₄ et R₅ représentent chacun, indépendamment, un atome d'hydrogène, un groupe alkyle en C₁-C₁₈.

3. Procédé selon la revendication 1, dans lequel ledit composé d'ammonium quaternaire hydroxyalkylé est choisi dans le groupe formé par les composés suivants : 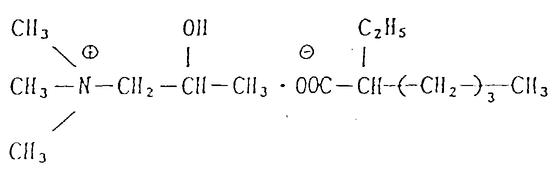 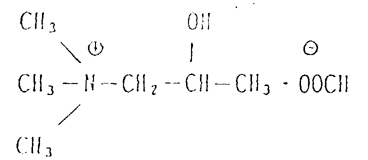 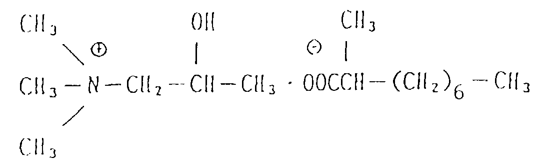 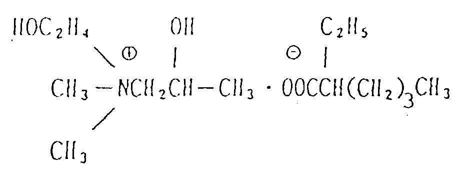 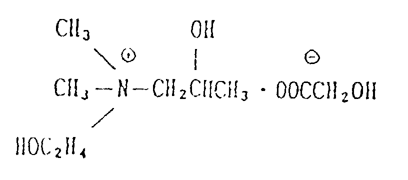 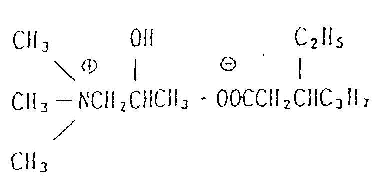 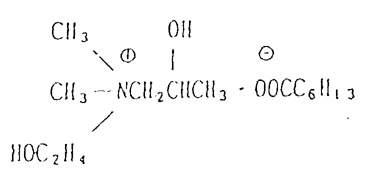 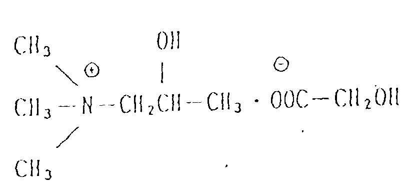 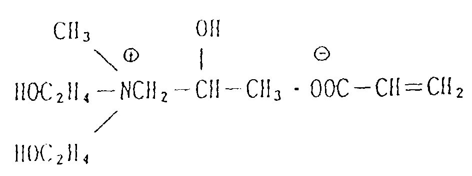 et

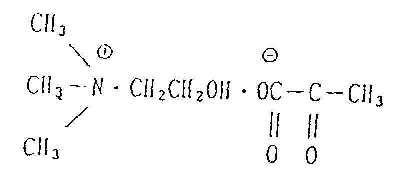

4. Procédé selon la revendication 1, dans lequel ledit composé d'ammonium quaternaire hydroxyalkylé est 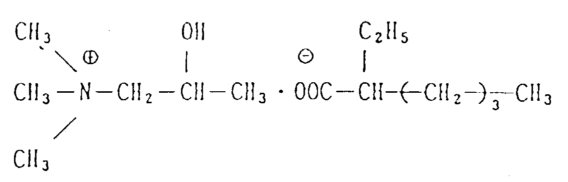 ou

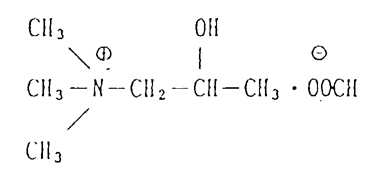

5. Procédé selon la revendication 1, dans lequel ledit oxyde de phosphorène est un composé représenté par la formule (II) ou (III), dans laquelle R₂, R₃, R₄, R₅, R₆ et R₇ représentent chacun, indépendamment, un atome d'hydrogène, un atome de chlore, un groupe méthyle, un groupe éthyle, un groupe propyle, un groupe isopropyle ou un groupe butyle.

6. Procédé selon la revendication 1, dans lequel ledit oxyde de phosphorène est choisi dans le groupe formé par l'oxyde de 1-méthylphosphorène, l'oxyde de 3-méthyl-1-phénylphosphorène, l'oxyde de 3-méthyl-1-benzyl-phosphorène, l'oxyde de 3-méthyl-1-éthylphosphorène, l'oxyde de 3-méthyl-1-éthylphénylphosphorène, l'oxyde de 1-phényl-3-(4-méthyl-3-pentenyl)phosphorène et l'oxyde de 1-phényl-3-chlorophosphorène.

7. Procédé selon la revendication 1, dans lequel ledit oxyde de phosphorène est l'oxyde de 3-méthyl-1-phénylphosphorène.

8. Procédé selon la revendication 1, dans lequel ledit catalyseur de trimérisation est utilisé en une quantité dans la gamme de 0,1 à 10% en poids, sur la base du poids dudit polyisocyanate organique.

9. Procédé selon la revendication 1, dans lequel ledit catalyseur de carbodiimidification est utilisé en une quantité dans la gamme de 0,05 à 5% en poids, sur la base du poids dudit polyisocyanate organique.

10. Procédé selon la revendication 1, dans lequel le rapport en poids dudit catalyseur de trimérisation au catalyseur de carbodiimidification est dans la gamme de 0,5/1 à 20/1.

11. Procédé selon la revendication 1, dans lequel ledit polyisocyanate organique est choisi dans le groupe formé par le 2,4-diisocyanate de tolylène, le 2,6-diisocyanate de tolylène, le diisocyanate de tolylène brut, le diisocyanate de diphénylméthane, le diisocyanate de diphénylméthane brut, le 1,6-diisocyanate d'hexaméthylène, et le diisocyanate de diphénylméthane hydrogéné.

12. Procédé selon la revendication 1, dans lequel ledit polyol est au moins un polyol ayant un indice d'hydroxyle dans la gamme de 20 à 600 mgKOH/g.

13. Procédé selon la revendication 1, dans lequel les proportions de mélange dudit polyisocyanate organique, dudit polyol et de ladite eau sont telles que l'indice d'isocyanate défini par le rapport en équivalents de NCO/OH ne descend pas au-dessous de 1,8.

14. Procédé selon la revendication 1, dans lequel ladite eau est utilisée en une quantité dans la gamme de 0,3 à 1,8% en poids, sur la base du poids total dudit polyisocyanate organique, dudit polyol et de ladite eau.

15. Procédé selon la revendication 1, dans lequel ladite mousse de polyisocyanurate modifié a une densité de gonflage libre n'excédant pas 30 kg/m³.

16. Catalyseur destiné à être utilisé pour polymériser l'isocyanate, comprenant un composé d'ammonium quaternaire hydroxyalkylé représenté par la formule (I) telle que définie dans la revendication 1 et un oxyde de phosphorène représenté par la formule (II) ou (III) telle que définie dans la revendication 1.

17. Composition de polyol comprenant un polyol, de l'eau et ledit catalyseur décrit dans la revendication 16.
